Europäisches Patentamt

European Patent Office

Office européen des brevets

(11) Veröffentlichungsnummer: **0 314 054**
**A1**

# (12) EUROPÄISCHE PATENTANMELDUNG

(21) Anmeldenummer: 88117714.1

(22) Anmeldetag: 25.10.88

(51) Int. Cl.⁴: **H02K 23/04**

(30) Priorität: 28.10.87 DE 3736519

(43) Veröffentlichungstag der Anmeldung:
03.05.89 Patentblatt 89/18

(84) Benannte Vertragsstaaten:
AT BE CH DE ES FR GB GR IT LI LU NL SE

(71) Anmelder: **Standard Elektrik Lorenz Aktiengesellschaft
Lorenzstrasse 10
D-7000 Stuttgart 40(DE)**

(72) Erfinder: **Ebner, Jens
Martinstrasse 11
D-7823 Bonndorf(DE)**

(74) Vertreter: **Pohl, Heribert, Dipl.-Ing et al .
Standard Elektrik Lorenz AG Patent- und
Lizenzwesen Postfach 30 09 29
D-7000 Stuttgart 30(DE)**

(54) Gleichstrommaschine mit permanentmagnetischem Ständer.

(57) Bei einer Gleichstrommaschine mit permanentmagnetischem Ständer soll das Rastmoment des Läufers durch einfache und kostengünstige technische Mittel verringert werden. Das wird dadurch erreicht, daß die Permanentmagnetschalen (2,3) des Ständers (1) asymmetrisch zueinander angeordnet sind.

EP 0 314 054 A1

## Gleichstrommaschine mit permanentmagnetischem Ständer

Die Erfindung betrifft eine Gleichstrommaschine mit einem permanentmagnetischen Ständer, welcher aus wenigstens einem Paar Permanentmagnetschalen besteht.

Derartige Gleichstrommaschinen sind allgemein bekannt. Bei den meisten dieser Gleichstrommaschinen sind die Permanentmagnetschalen eines Permanentmagnetpaares symmetrisch zueinander angeordnet, d.h. ihre Symmetrieachsen, welche in der Regel mit der Magnetisierungsrichtung übereinstimmen, fluchten. Es ist ebenfalls allgemein bekannt, daß Gleichstrommaschinen mit einem solchen Ständer ein verhältnismäßig großes Rastmoment aufweisen.

Um dieses Rastmoment zu verkleinern, ist bereits vorgeschlagen worden (DE-OS 25 58 958), die Enden der Permanentmagnetschalen V-förmig abzuschregen, um auf diese Weise ein geschrägtes Ständererregerfeld zu erzeugen. Für diese Lösung sind besonders geformte Permanentmagnete erforderlich, welche zu diesem Zweck eigens hergestellt werden müssen. Diese bekannte Lösung ist daher auf jeden Fall unwirtschaftlich.

Es ist daher bei anderen Gleichstrommaschinen bekannt geworden (DE-GM 70 12 818 und Japanische OS 53-136 609), jede Permanentmagnetschale in Längsrichtung in mehrere Permanentmagnetschalen zu unterteilen und diese in Umfangsrichtung des Ständers versetzt zueinander anzuordnen. Bei dieser bekannten Lösung können zwar handelsübliche Permanentmagnetschalen verwendet werden, jedoch ist für die Montage eines derart aufgebauten Ständers ein größerer Aufwand erforderlich.

Die der Erfindung zugrundeliegende Aufgabe besteht deshalb darin, eine Gleichstrommaschine vorzuschlagen, bei welcher mit einfachen und kostengünstigen Mitteln das Rastmoment wesentlich verringert ist.

Diese Aufgabe ist erfindungsgemäß dadurch gelöst, da die Permanentmagnetschalen derart asymmetrisch zueinander angeordnet sind, daß sich ihre Symmetrieachsen unter einem Winkel schneiden, welcher einer halben Ankernutteilung entspricht.

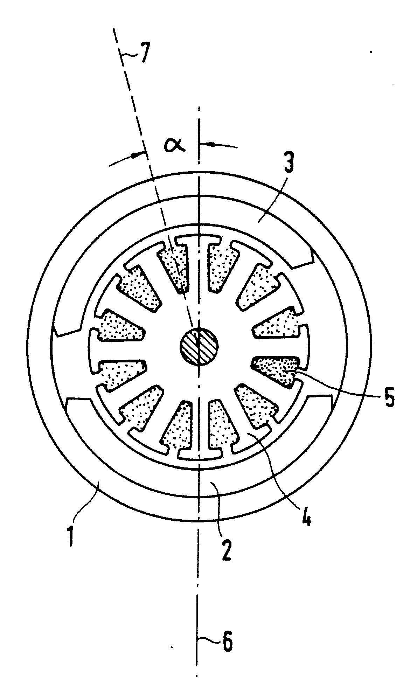

Die Erfindung ist nachstehend anhand eines in der Figur verdeutlichten Ausführungsbeispieles der erfindungsgemäßen Gleichstrommaschine im Querschnitt dargestellt.

Der dort gezeigte Motor besteht aus dem Gehäuse 1, welches gleichzeitig als magnetischer Rückschluß dient, den beiden Permanentmagnetschalen 2 und 3 und dem Läufer 4. Der Läufer 4 besitzt zwölf Nuten 5, in denen die Läuferwicklung angeordnet ist. Die Nutteilung beträgt bei dem gezeigten Ausführungsbeispiel somit 30°. Wie aus der Figur weiter ersichtlich, sind die Permanentmagnetschalen 2 und 3 asymmetrisch zueinander angeordnet, d.h. die Symmetrieachse 6 der Permanentmagnetschale 2 und die Symmetrieachse 7 der Permanentmagnetschale 3 schließen den Winkel α ein, welcher einer halben Ankernutteilung, d.h. im gezeigten Ausführungsbeispiel 15°, entspricht.

Versuche haben gezeigt, daß bei Anwendung der vorgeschlagenen technischen Lehre das Rastmoment wesentlich verringert wird.

## Ansprüche

Gleichstrommaschine mit einem permanentmagnetischen Ständer, welcher aus wenigstens einem Paar Permanentmagnetschalen besteht, **dadurch gekennzeichnet,** daß die Permanentmagnetschalen (2, 3) derart asymmetrisch zueinander angeordnet sind, daß sich ihre Symmetrieachsen (6, 7) unter einem Winkel (α) schneiden, welcher einer halben Ankernutteilung entspricht.

J. Ebner 1
5. 10. 88

Europäisches Patentamt

EUROPÄISCHER RECHERCHENBERICHT

Nummer der Anmeldung

EP 88 11 7714

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 700 319 (MABUCHI MOTOR) <br> * Spalte 3, Zeilen 30 - 38; Spalte 4, Zeilen 58 - 63; Spalte 5, Zeilen 15 - 23; Anspruch 5 * <br> --- | 1 | H 02 K 23/04 |
| A | EP-A-0 094 609 (INTERNATIONAL STANDARD ELECTRIC CORP.) <br> * Seite 2, Absatz 2; Anspruch 6 * <br> ----- | 1 | |
| | | | **RECHERCHIERTE SACHGEBIETE (Int. Cl.4)** <br><br> H 02 K 1/00 <br> H 02 K 23/00 |

Der vorliegende Recherchenbericht wurde für alle Patentansprüche erstellt

| Recherchenort | Abschlußdatum der Recherche | Prüfer |
|---|---|---|
| BERLIN | 05-01-1989 | GESSNER E A F |